# EUROPEAN PATENT APPLICATION

(11) **EP 3 812 197 A1**
(43) Date of publication of application: **28.04.2021**
(21) Application number: 20468001.1
(22) Date of filing: 22.10.2020
(51) Int. Cl.: B60L 53/10, B60L 53/14, B60L 53/62, B60L 53/66

(54) **SYSTEM AND PROCEDURE FOR AUTOMATIC, CONTROLLED AND FLEXIBLE CHARGING OF ELECTRIC VEHICLES**

(30) Priority: 22.10.2019 SI 201900199
(71) Applicant: Iskraemeco, d.d., 14000 Kranj (SI)
(72) Inventor: Smolnikar, Miha, 1233 Dob (SI); Dostal, Tomaz, 1251 Moravce (SI); Delimar, Vjekoslav, 4000 Kranj (SI); Bizjak, Uros, 4208 Sencur (SI); Germovsek, Jure, 4294 Krize (SI)
(74) Representative: Djukic, Dusan

(57) **Abstract**

The system and procedure for automatic, controlled and flexible charging of electric vehicles (2) is based essentially on the operation of the charging controller (1) and the introduction of an aggregation platform (5), which connects all stakeholders of electric vehicle charging (2) with various technologies. The controller (1) controls and manages the vehicle (2) charging procedure in the mode of automatic operation in accordance with the operating conditions of the power network (6), the battery status of the vehicle (2) and the smart contract (53) concluded between the user (4) and the electricity supplier (9). According to the invention, the degree of flexibility of charging is entered in the smart contract (53) with which the user (2) allows the supplier (9) to charge the vehicle (2) when the network (6) is less loaded, for which the user is offered a lower service price. The system according to the invention automatically operates even in the conditions of non-functioning communications and roaming in foreign networks, wherein the user receives only one bill from his supplier (9).

## Description

This invention relates to a system and a procedure for controlled electric vehicle charging from extensive smart grids at different geographical locations where different local electricity providers and charging infrastructure operators are present. Complex operating and volatile smart grid energy balance conditions occur at such locations and the lifestyle and habits of electric vehicle users must be taken into consideration.

### INTRODUCTION

Energy has always been the basic condition for technological, technical, social and other progress. In recent decades, the increasing need for energy was technology and lifestyle led, and this necessitated increased fossil fuel energy generation, further damaging the environment; consequently, international incentives and regulation have been introduced to reduce our consumption of such fuel and increase our consumption of renewable source clean energy. Technological progress increases population mobility; until recently, the increased number of fossil fuel, particularly gas and oil, driven internal combustion engine vehicles was a cause of pollution; electric vehicles were developed to mitigate this, but the travel range of such vehicles was initially insufficient to make their use worthwhile. However, in the last decade, electric vehicle battery technology has advanced, enabling electric vehicles to travel a few hundred kilometres per charging, thereby meeting the needs of the majority of the population.
The increasing number of electric vehicles in use has increased the need for electricity and this has resulted in technical problems related to energy generation, transmission and distribution, power consumption and generation balance, power grid operation reliability in terms of grid element failure and the like. Power grids are complex systems and must be considered holistically.
Increased electricity consumption and concomitant generation pursuant to the increasing number of electric vehicles in use amplifies transmission and distribution grid load, increasing the likelihood of individual network part failure, causing large-scale peak load and system instability, which may lead to power grid collapse.

Electricity generation source structure also affects system stability. In the case of the higher share accounted for by renewable sources, that is, more than 20% or 30% of total electricity generation capacity resulting from reduced sunlight because of clouds, fog or night, wind shortage and uncontrolled increases in charging may lead to system balance collapse. This is why energy systems must be developed for peak need even though they will operate for lower need the majority of time, and such systems are more expensive.

In light of the aforementioned, electricity system operation optimisation activities are in development, including technical improvements and user-friendly business solutions for electricity offtake for electric vehicles, including setting up and adjusting charging points, measuring electricity consumption, grid balancing, communications technology, data transfer security and encryption in terms of technical improvement, and method of payment, cost accounting for various consumption conditions and business communication method in terms of business solutions. Users are often faced with unsatisfactory, heterogeneous charging point structures with various providers with different charging and payment access procedures; for example, some charging stations only have one electricity supplier where electric vehicle users must have a suitable access card to pay for the charging service; as a result, users must have different access cards for different electricity providers and this is not user-friendly.

Despite the aforementioned optimisation activities, there are still many unresolved technical problems in the sense of electricity system stability resulting from increased power offtake pursuant to the increasing number of electric vehicles in use, the battery charging speed and status, and charging point access, especially in terms of roaming in other networks, and the like; for example, one of the problems is charging electric vehicles at home, when visiting someone or at work, which raises the issues of who pays for the consumed electricity and the issue of double billing and taxation. The next problem which has been insufficiently discussed is related to roaming while abroad, raising the issues of how to select electricity providers, and charging procedures, payment methods and conditions.
In order to decrease electric vehicle charging at peak times, users should be offered lower tariffs in off-peak times and the periods of increased electricity generation. Because such systems are dynamic, users may not know when these periods are in place and face difficulty in charging method selection. To these ends, electric vehicle charging must be simplified by means of user-tailored interfacing which takes into account different user profiles, such as the elderly and those without technical education. An example of a user-friendly approach to service use and payment approach is without a doubt one using mobile telephony services.

Electric vehicle charging systems and procedure are concerned with billing and paying for consumed electricity; therefore, metrologically verified and legally approved electricity meters must be integrated into such systems. There are several electric vehicle charging approaches, that is installing meters in station charging pole, cable and vehicle. Each solution has its strengths and weaknesses. Installing meters in charging poles enables the charging of all electric vehicles once owners have identified themselves in the system and this is usually done with NFC based cards, such as RFID; the advantage of this is that users do not need to provide for the metrological maintenance of the meter, but there are several weaknesses: in the case of a large number of charging points, which may, for example, be located in street light posts or in parking spaces, or in the case of a larger number of charging points on the same charging post, or similar, the number of meters significantly rises, thereby making the entire electric vehicle charging system much more expensive. Moreover, such solutions do not enable charging an electric vehicle at work or when visiting friends. The advantage of installing electricity meters in charging cables is that users can charge any electric vehicle upon prior log-in to the system, but the solution is slightly awkward because the user interface is relatively user-unfriendly. In both of the aforementioned cases, the electric vehicle must have its own control and communication system to communicate battery status to the charging system.

The third option is connecting electricity meters to vehicles' diagnostic and communication systems; they will then have access to data about the vehicle, driving method, battery behaviour dynamics and the like, which is important for consumption forecasting. Moreover, the user interface is integrated into the vehicle's information interface and as such more user-friendly.

As aforementioned, electricity distribution network stability is conditioned upon balanced electricity generation and consumption. Current smart grid solutions achieve balance using dedicated management systems to monitor grid status and energy balance data and forecast for decision-making. For example, such management systems anticipate increased consumption because of temperature fluctuation and decreased electricity generation from renewable sources because of less sunlight or absence of wind, and the like. In the case of a large number of system users, the flow of information needed to make decisions significantly increases, thereby decreasing entire smart grid responsiveness.

The majority of electric vehicle charging systems require a functioning communication connection with electricity providers for user authentication. In the case of communication failure, the user is unable to charge its electric vehicle at such charging points, which is problematic if the vehicle battery is already empty.

Object of the invention is system and procedure for charging electric vehicles, where the charging will take place fully automatic anywhere in the grid, including while roaming in foreign networks and when using private household charging connections, with predetermined individual requirements so that users will not need to communicate or personally interact with the system prior to charging and will automatically receive the most cost-effective service tariff, and that the entire power grid will always operate in optimal electricity generation and consumption balance. In accordance with international classifications, the invention falls into class B60L 53/10.

This invention solves the technical problem of electric vehicle charging at optional charging points, allowing users to flexibly, automatically and optimally pay the electricity supplier for the consumed electricity regardless of charging point location while preserving optimal grid energy balance.

### STATE OF THE ART

There are any solutions for segments of the technical problem. One of the solutions for increasing the number of charging points and enabling vehicle charging uses smart charging cables containing electricity meters, controllers, and identification and communication interfaces to connect to any charging point within the local area; as described in patent claim EP 25 97 426 A1. The device is designed to detect charging point location, measure energy consumption, and compare and check values with the values on fixed meters for such meter points; users conclude contracts for charging and billing via a cable interface or mobile device. A weakness of this solution is that communication is carried out solely by means of charging station owners' remote servers, which then communicate with the selected electricity supplier; for safety reasons, this procedure represents additional complications for use in networks during roaming. Moreover, the user cable interface is user-unfriendly and the procedure is neither optimally automated nor flexible based in terms of user need. Another weakness of this solution is that it does not solve the problem of smart grid operation balance.

Another solution is described in US 2018/0225774 A1, whereby a charge controller is installed in the electric vehicle which includes an electricity meter, management unit and communication unit to store and transmit charging data to the billing centre, where, based on charging location and time, taxation will be determined in the central server. The proposed invention does not optimally enable smart grid energy balance or a user-friendly choice of tariffs in advance. This solution is not appropriately automated or flexible in terms of charging conditions.

Another solution is described in patent file WO 2019/020461 A1, which is aimed at solving the technical problem of electric vehicle charging at various charging points owned by different electricity suppliers selling energy under different conditions, prices and payment methods. This problem is particularly evident when roaming in other cities and countries. This invention enables charging procedure and billing to be carried out on the basis of a smart contract by which charging and consumption data is sent to the electricity supplier's end address regardless of charging location; in this solution, tariffing is implemented in the context of a smart contract, however, because this procedure is based on vehicle owner agreement at each charging it is not automated. This invention does anticipate possible pre-purchased charging times but is not flexible in terms of user need, and battery or network status, and consequently does not contribute to smart grid stabilisation and optimisation.

A system for flexible grid condition adjustable electric vehicle charging is described in patent file EP 2 439 099 A2. In this case, charging flexibility solely refers to the regulation of charging currents related to the unstable electrical contact between the charging cable and smart grid's vehicle charging ability. It does not solve charging flexibility problems in the sense of vehicle battery status and/or the need for vehicle battery status level and/or vehicle readiness for anticipated use in terms of time. The proposed system encompasses charging stations, management centres, smart grids and electric vehicles mutually connected into the internet network as a priority via the TCP/IP protocol. This solution is neither comprehensive, nor does it enable dynamic tariffing, automated decisions about charging forecasting based on user need and the anticipated smart grid status, nor does it solve the problem of roaming in foreign networks.

Patent EP 23 24 327 B1 solves the technical problem of electric vehicle charging at optional locations in a user-friendly method, ensuring data security, misuse reduction and user freedom to select electricity supplier, and is based on a mobile numerical device integrated or additionally built-in to electric vehicles containing central control and numerical units, and actuator module, numerical unit, and communication and encryption modules. It includes an option to connect the numerical device with a vehicle's central computer and co-use the vehicle's user interface. The charging procedure encompasses the device's communication in the vehicle with the charging point and the billing centre, where the data needed to select the electricity supplier, charging conditions and similar is exchanged. Data transmission is a weakness of this procedure because it decreases system reliability when a large number of operations are taking place. Despite the great flexibility of vehicle charging selection and user-friendly interface, the proposed solution may be too demanding for average users because it is not automated. Moreover, it does not optimally enable smart grid balancing and vehicle battery status diagnostics, or solve the issue of automated vehicle charging when tariffs are cost-effective for users.
Another solution, described in patent file EP3384473 A1, aims to simplify electrical vehicle charging and assure data security. Instead of a central server, the invention proposes using the P2P network's interconnected nodes, whereby the electric vehicle is connected to a charging station which initiates charging and security integrated within the entire network. A vehicle's P2P module sends ID and the charging request to the P2P application in the charging station, which then connects with the application in computers that operate as nodes, where the buyer is authenticated and charging approved. All relevant data is recorded in the electronic contract; blockchain technology may be used non-exclusively. The vehicle can also communicate directly with other P2P network nodes. Different models allow the energy meter to be integrated in the charging point, or in the vehicle, or connecting cable with ability to connect non-P2P network vehicles. It does not balance generation and consumption, nor does it propose a solution to optimise electric vehicle charging in a way that vehicles are charged up to agreed battery levels at the lowest price. Moreover, it does not propose a solution for charging in the case of non-functioning communication.

The aforementioned patents have not solved the said technical problem.

### DESCRIPTION OF INVENTION

Our invention solves the technical problem with an electric vehicle charging system, and procedure, whose features are presented in the characterising part of patent claims 1 and 10; its implementing features are defined in the sub-claims.
The invention's system and procedure are explained in detail in the continuation and figures as follows:
Figure 1: Diagram of invention's electric vehicle charging system.
Figure 2: Diagram of invention's system for user roaming in foreign grids.

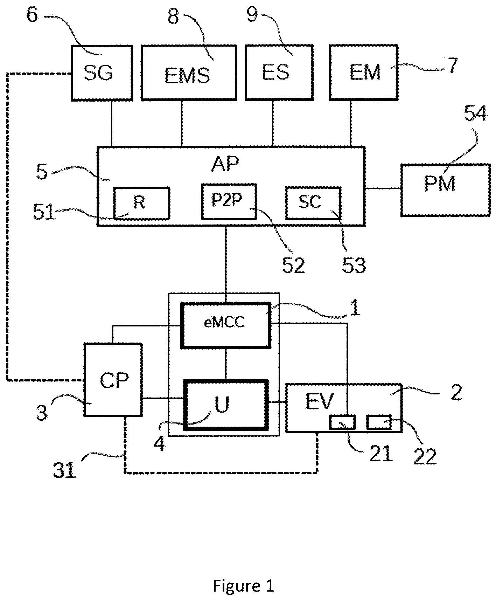

Our solution to the aforementioned technical problem is analogous to that used for roaming and billing by mobile telecommunication networks, whereby mobile devices automatically connect to base stations where services are automatically enabled without user participation in the selection processes. Our system is diagrammatically presented in Figure 1, its essential components being at least the following stakeholders: one or more users (U) (4), at least one charge controller (eMCC) (1), at least one electric vehicle (EV) (2), one or more charging points (CP) (3), a smart grid (SG) (6), an electricity market (EM) (7), a system energy manager (EMS) (8), an electricity supplier (ES) (9), and an aggregation platform (AP) (5).

A material feature of our invention's system is that the user (4) is placed at the centre of the system. User means one or more consumers using the electric vehicle (2) charging service. The electric vehicle (2) can be any vehicle whose main or auxiliary drive uses electricity stored in the vehicle (2) battery. Electric vehicles (2) are cars, scooters, motorbikes, electric skateboards, cargo vehicles, vehicles for large numbers of passengers, water and air vessels, and the like.

The charge controller (1) is a device controlled by a micro-processor owned by the user (4) and configured for storage, encryption and communication with system stakeholders. As a priority, but non-exclusively, the controller (1) is integrated in the electric vehicle (2). In the first special implementation case, the controller (1) may be non-exclusively integrated in the charging cable (31), which is placed between the charging point (3) and vehicle (2). In the second implementation case, the controller (1) can be integrated in the charging point (3). In either case, the controller (1) is connected in terms of communication with the charging point (3) before and during vehicle (2) charging with the vehicle computer control system (21) and vehicle battery management system (22), and via the aggregation platform (5) with all system stakeholders necessary to carry out the electric vehicle charging procedure (2). According to the invention, the controller (1) also includes a metrologically and functionally approved electricity meter.

Charging points (3) in this patent file mean any points where electric vehicle (2) batteries can be conductively or inductively charged. Charging points are non-exclusively:
- public charging points, including those in parking lots and by street light poles;
- semi-public charging points, including work, friends' and relatives' charging points;
- fast charging points at public places usually owned by charging station operators; and
- private charging points, including those at home.

Smart grid (6) means the entire transmission and distribution grid, including operators and connected devices.
The aggregation platform (5) according to the invention balances the needs and options of individual system stakeholders, balancing and defining system operation accordingly. The aggregation platform (5) according to the invention is configured to balance and control roaming processes (R) (51) in other local and global power grids, to manage and coordinate mutual P2P communication connections (52) between system stakeholders accordingly and to balance the implementation of smart contracts (53). In a special embodiment, the system platform (5) includes a platform manager (PM) (54).

The invention's other system features are accordingly explained in the continuation alongside the description of the procedure.

The invention enables the user to charge the electric vehicle (2) by concluding a smart contract (53) with a selected electricity supplier (9), the smart contract (53) being comprised of mandatory and other basic contract data about:
- the user (4);
- the electricity supplier (9);
- times when the vehicle must be ready for use, such as when departing for work and returning home, and when going shopping, to parties and on trips at the weekend;
- time period flexibility levels, such as when the user undertakes to carry out delayed charging;
- anticipated range in individual time periods;
- a charging price list for individual time periods;
- a charging price list for agreed time period violation, such as when the user wants to have the vehicle charged before an agreed time period; and
- energy supplier fines, including those for when the vehicle is not charged because of problems with the grid.
The smart contract (53) the invention envisages integrates flexibility into the electric vehicle (2) charging procedure, thereby better enabling user-friendly electricity pricing and smart grid balancing (6). For example, if the system energy manager (8) detects reduced grid (6) electricity generation and/or increased consumption, the invention enables an option to cancel charging or reduce charging current in vehicles (2), with the change recorded in the smart contract (53); the manager (8) can thus implement grid balancing. The invention enables such activities to be carried out automatically in the framework provided in smart contracts (53). Users (4) with increased contractually determined flexibility also face a lower tariff for the consumed electricity.

The smart contract is basically a computer-generated transaction protocol implemented once all pre-determined conditions are satisfied. Smart contract implementation is usually, but not exclusively, based on blockchain technology.
The invention enables smart contracts (53) to be stored in the controller (1) and electricity supplier (9) database.

The electric vehicle (2) charging procedure is accordingly enabled by the user (4) when connecting the charging point (3) to the vehicle (2) using a charging cable (31) and when approaching an inductive charging point in said vehicle; pursuant to this, the controller (1) automatically establishes communication connection with the charging point (3), from where it obtains the identification code and data about the status and available capacity of the charging point (3). In a special implementation case, where a vehicle (2) is charged at semi-public or private charging points (3), such as at home, at a friend's or a neighbour's, the controller (1) establishes communication connection with the smart electricity meter connected to the object in which the charging point (3) is located. In the next step, the controller (1):
- automatically establishes communication connection with the vehicle's control computer system (21) to checks the vehicle's (2) battery status;
- checks the charging conditions and limitations recorded in the smart contract (53) located in the controller's (1) memory;
- asks the aggregation platform (5) to submit data about the grid (6) regarding current and anticipated congestion and instructions for optimal electricity consumption;
- checks for potential user (4) manual entry into the computer control system (21) of the vehicle (2) to see if any priority requests regarding charging are entered;
- prepares a charging plan based on the aforementioned data, including the charging current time profile; and
- submits a charging command to the vehicle battery management system (22) integrated in the vehicle (2) and independently controls the charging schedule in accordance with the aforementioned time profile.

The invention's aggregation platform (5) combines all the relevant data about current and anticipated smart grid (6) status at all levels within one supply line at one transformer station within one distribution or entire electricity system. Furthermore, the platform (5) accordingly accesses and processes electricity market (7) data and submits it to the controller (1) on demand.

The invention's described procedure enables control scalability over power grid energy status, that is, smart grid (6), from the level of house connectors to low-voltage and medium-voltage distribution grids, and to high-voltage transmission grids.

The invention records each vehicle (2) charging in the smart contract (53) which, based on the aforementioned mandatory and other basic contract data, includes, at the least, data on:
- the charging point (3);
- the local energy provider supplying electricity to the charging point (3);
- energy price in the charging period;
- electricity throughput amount; and
- charging time.

The supplemented contract (53) is accordingly recorded in the memory of the electricity meter integrated in the controller (1). The electricity meter is metrologically and functionally approved and ensures the security of the stored data in the meter's internal memory. The contract (53) is then accordingly sent to the aggregation platform (5), from where it is sent to all charging procedure stakeholders involved in the charging process for incurred cost equalisation, including the electricity supplier (9), local energy provider, charging station owner (3), power grid operator, and providers of auxiliary services, such as cost equalisation, roaming, data transmission, balancing, energy consumption equalisation, financial accounting and the like. Financial accounting based on said cost equalisation is then implemented, including that for taxation purposes, which is dependent on vehicle (2) charging location; the energy supplier (9) then issues one bill to the user (4), including all the costs, the consumed energy and taxes.

In the special implementation case, when charging is performed at semi-public or private charging points (3) and electricity meter identification at the offtake point is recorded into the contract (53), offtake for electric vehicle (2) charging is taken into consideration via the platform (5) during the cost equalisation procedure and this electricity is subtracted from the balance at meter value at the offtake point; in the second implementation case, such measured electricity is communicated to the meter at the offtake point meter which subtracts this energy from its measured consumption and records the difference into its memory.

In the next implementation case, when it is impossible to establish communication between the controller (1) and aggregation platform (5), the vehicle (2) charging procedure does not take into consideration power grid state and a decision on charging based on other parameters is generated in the controller (1). Data about charging, that is, the charging point identification code, the amount of the supplied electricity and charging time are recorded into the contract (53) accordingly, and the contract (53) is stored in the memory of the electricity meter in the controller (1). Subsequently, when communication can be established between the controller (1) and the platform (5), the contract (53) is first transferred to the aggregation platform (5) then onwards to all charging procedure stakeholders.

In the second implementation case, when automatic charging point (3) identification is not possible, the charging point is entered manually. The invention includes several ways to enter the charging point (3) identification code, including using the barcode or QR code, a mobile phone application, and a user interface in the vehicle (2).
Based on the described electric vehicle (2) charging procedure and the last two described special cases, the invention's charging procedure also works when there is communication network failure, which is not the case with other solutions. In such cases, the controller (1) becomes the central and independent system stakeholder according to the system.

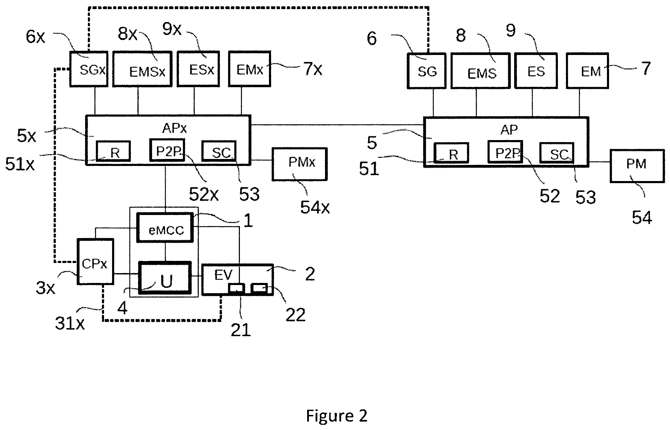

Problems with electric vehicle charging arise when users roam because of different charging station (3) access procedures, and different and varied authentication and service payment methods, especially when roaming in foreign countries where language may be an obstacle for users, including misleading expressions and instructions.
The invention solves roaming problems by connecting national aggregation platforms (5x) to the international system, which includes all electric vehicle charging stakeholders in many countries as seen in Figure 2. In this special implementation case, the electric vehicle (2) charging procedure is accordingly exactly the same for the user (4) as the domestic grid, and the smart contract (53), supplemented with all data about the completed charging, is transferred to the domestic aggregation platform (5) via the national aggregation platform (5x), where all of the costs incurred during the user's roaming in a foreign network (6x) are equalised for all stakeholders. Based on the invention's inherent equalisation, the contract electricity supplier (9) makes the calculation and issues a bill to the user (4).

The proposed method therefore enables the flexible and automated charging of an electric vehicle (2) in any grid (6) at any charging point (3); consequently, users are not involved in the payment apportionment process for the consumed electricity and receive a single bill for all electricity purchase costs for vehicle (2) charging from their contractual electricity supplier (9) at a guaranteed lowest price for said services while the optimal energy balance of the entire power grid (6) is preserved.
The invention allows communication connections among individual system stakeholders to be different and adapted to existing communication technologies. The invention proposes that the P2P architecture for communication connections be utilised as a priority.

## Claims

1. System for automatic, controlled and flexible charging of electric vehicles comprising the following: one or more users (4), one or more charge controllers (1), one or more electric vehicles (2), one or more charging points (3), a smart grid (6), an electricity market (7), a system energy manager (8), an electricity supplier (9) and an aggregation platform (5),
**characterised in that:**
- the controller (1) contains the metrologically and functionally approved electricity meter,
- the controller (1) is integrated in the electric vehicle (2), or in the electrical charging cable (31) or in the charging point (3),
- each vehicle (2) charging is recorded in the smart contract (53).

2. The system according claim 1
**characterised in that:**
the aggregation platform (5) is configured to:
- control and balance roaming (51) in foreign power grids (6x),
- manage and balance mutual communication connections (52) between system stakeholders, and
- coordinate the implementation of smart contracts (53).

3. The system according to claims 6 and 7
**characterised in that:**
- the communication connection architecture is preferably, but not exclusively P2P,
- the aggregation platform (5) is in communication connection with other national aggregation platforms (5x) in which the user (4) is roaming, and
- the aggregation platforms (5) and (5x), respectively, have platform managers (54) and (54x) respectively.

4. Procedure for automatic, controlled and flexible charging of electric vehicles **characterised in that:**
the smart contract (53) for electric vehicle (2) charging, concluded by the user (4) with a selected electricity supplier (9), is recorded into the charge controller (1), preferably into the memory of the electricity meter integrated in the controller (1) and into the electricity supplier (9) database, and
that the smart contract is optionally implemented using block chain technology, wherein the said smart contract includes, at the least, data about:
- the user (4),
- the electricity supplier (9),
- time periods for vehicle (2) readiness to use;,
- the level of deviation flexibility from agreed time periods for vehicle (2) charging,
- anticipated range of vehicle in individual time periods,
- a pricelist for vehicle (2) charging in individual time periods,
- a pricelist for vehicle (2) charging in the case of deviations from agreed charging periods by the user, and
- penalties for the energy supplier (9) in the event the vehicle (2) is not charged in the agreed time period.

5. The procedure according to claim 4:
**characterised in that:**
- the user (4) connects the charging point (3) or (3x) and the electric vehicle (2) with the charging cable (31) or brings the vehicle (2) in proximity to the point anticipated for inductive charging,
- the controller (1) automatically establishes communication connection with the charging point (3) or (3x) in the case of failed communication between the vehicle (2) and the charging point (3) or (3x) and then the user (2) manually enters the identification code of the charging points (3) or (3x),
- the controller (1) automatically establishes communication connection with the control computer system of the vehicle (21) and the vehicle's battery operation system (22), and
- the controller (1) automatically establishes communication connection via the aggregation platform (5) or (5x) with all system stakeholders with priority to the electricity supplier (9), system energy manager (8) or (8x), electricity market (7) or (7x) and the smart grid (6) or (6x).

6. The procedure according to claim 5
**characterised in that:**
- the controller (1) connects with the electricity meter on the charging point (3) or (3x) and reads its identification code,
- the controller (1) obtains information from the vehicle's battery operation system (22) about vehicle (2) battery status,
- the controller (1) checks charging conditions which are recorded into the smart contract (53),
- the controller (1) checks any potential manually entered commands made by the user (4) in the computer control system (21) of the vehicle (2) related to vehicle (2) charging,
- the controller (1) sends via the aggregation platform (5) or (5x) a request for the submission of data about the current and anticipated state of the congestion of the power grid (6) or (6x) and instructions for the optimal electricity offtake,
- the aggregation platform (5) or (5x) obtains data about the current and anticipated congestion of the power grid (6) or (6x) and the instructions for optimal electricity offtake from the system stakeholders, the system energy manager (8) or (8x) and the smart grid (6) or (6x) as a priority and submits them to the controller (1), and
- the aggregation platform (5) or (5x) supplies data from the electricity market (7) or (7x) about electricity prices and sends them to the controller (1) on demand.

7. The procedure according to claim 6
**characterised in that:**
- the controller (1) prepares a time profile of the charging current, and
- based on the obtained data the controller (1) sends a command to the vehicle's battery operation system (22) to start charging and controls the vehicle (2) charging procedure.

8. The procedure according to claim 6
**characterised in that:** in the case of failed communication with the aggregation platform (5) or (5x), the controller (1):
- based on the obtained data prepares a time profile of the charging current, and
- sends a command to the vehicle's battery operation system (22) to start charging and control vehicle (2) charging procedure.

9. The procedure according to claim 7 or 8
**characterised in that:**
after completion of charging, the controller (1) reads the data about the amount of supplied energy from the electricity meter in the controller (1).

10. The procedure according to claim 9
**characterised in that:**
the controller (1) is configured to
after completion of charging, enters data about vehicle (2) charging into the smart contract (53), including, at the least, data about:
- the charging point (3) or (3x) and/or the identification code of the electricity meter on the charging point (3) or (3x),
- the local energy provider supplying electricity to the charging point (3) or (3x),
- the price of energy during the charging period,
- the amount of supplied electricity, and
- vehicle (2) charging time,
and to store the smart contract (53) into the electricity meter memory integrated in the controller (1).

11. The procedure according to claim 10
**characterised in that:**
the controller (1) sends the contract (53) immediately or when communication connection with the aggregation platform (5) or (5x) is established via the aggregation platform (5) or (5x) to all charging stakeholders and as a priority to the electricity supplier (9), local energy provider, charging station owner (3) or (3x), system energy manager (8) or (8x), smart grid operator (6) or (6x), and
providers of auxiliary services, including, though non-exclusively, charging for cost equalisation, foreign power grid roaming cost, data transmission, group balancing, energy consumption balancing preparation and financial settlement service.

12. The procedure according to patent claim 11
**characterised in that:**
the local energy provider checks if the charging point (3) or (3x) is in private or semi-private ownership, and if it is in private or semi-private ownership,
subtracts the consumed electricity from the measured electricity consumption on the electricity meter at the charging point (3) or (3x).
